# FASCICULE DE BREVET EUROPEEN

(11) **EP 3 939 830 B1**
(45) Date de publication et mention de la délivrance du brevet: **03.04.2024**
(21) Numéro de dépôt: 21184773.6
(22) Date de dépôt: 09.07.2021
(51) Int. Cl.: B60P 1/28, B60P 3/22, B60P 3/42, B60P 1/64

(54) **COMPARTIMENT DE TRANSPORT MIXTE**
GEMISCHTES TRANSPORTABTEIL
MIXED TRANSPORT COMPARTMENT

(30) Priorité: 15.07.2020 FR 2007381
(43) Date de publication de la demande: 19.01.2022
(73) Titulaire: Établissements Galland, 55190 Pagny sur Meuse (FR)
(72) Inventeur: MAIREL, RÉMY, 55190 PAGNY SUR MEUSE (FR)
(74) Mandataire: Brungard, Yves Francois

(56) Documents cités:
- DE-U1-202013 004 307
- DE-U1-202013 105 113
- FR-A1- 2 940 791
- FR-A1- 3 082 800

## Description

### Domaine de l'invention

L'invention concerne un compartiment de transport mixte, permettant de transporter alternativement un matériau en vrac ou un liquide.

### Technique antérieure

Les engins de transport sont souvent spécialisés et ne permettent de transporter qu'une seule nature de matériau. Ainsi, pour transporter du liquide tel que de l'eau, du lait ou du carburant, on utilise des engins à citerne. Pour transporter des matériau en vrac, tel que du sable, du gravier, des céréales, on utilise des bennes formées d'une coque ouverte vers le haut. Un engin peut être une remorque attelable à un tracteur ou un camion équipé directement d'un compartiment tel que la citerne ou la benne. La benne est fréquemment montée basculante pour décharger le matériau contenu dans la benne.

Du fait de la spécialisation des engins, il est rare que ceux-ci fassent un chemin de retour avec un chargement. De ce fait l'utilisation des engins n'est pas optimale, puisqu'une partie du parcours se fait à vide.

Il a été proposé dans le document GB 2 298 830 une remorque comportant deux citernes en partie inférieure surmontées par un espace de chargement. Les citernes sont séparées de l'espace de chargement par un plancher supporté par des berceaux qui prennent appui sur les citernes. Cette remorque n'est pas adaptée au transport de matériau en vrac.

Il a également été proposé dans le document DE 10 2013 004 401 A1 une remorque destinée au transport de lisier, donc sous forme liquide, pour un déchargement dans un méthaniseur, puis pour le chargement au même endroit des résidus solides extraits du méthaniseur. Pour cela, la remorque comporte une benne comportant une paroi extérieure s'étendant selon une direction longitudinale et délimitant un espace de stockage, une paroi intermédiaire et séparant l'espace de stockage en une citerne pour contenir du liquide en partie inférieure et un espace de stockage de vrac pour contenir un matériau en vrac en partie supérieure, la zone de stockage de vrac étant ouverte vers le haut. La paroi intermédiaire comporte deux pans inclinés reliés par une paroi horizontale.

La forme d'une telle benne n'est pas optimisée et nécessite des matériaux de forte épaisseur, ce qui rend la benne très lourde et limite la charge utile.

Le document FR 1 870 748 propose diverses formes de citernes de transport permettant de transporter du liquide et de recevoir du matériau en vrac. La citerne réalise la structure du véhicule. On constate que ces constructions résistent mal aux contraintes imposées lors de la circulation du véhicule sur route. D'autres citernes permettant de transporter du liquide et de recevoir du matériau en vrac sont connues par ex. de FR 2 940 791 A1, DE 20 2013 105113 U1 et DE 20 2013 004307 U1.

C'est donc un objectif de l'invention de proposer un compartiment et un véhicule de transport permettant de transporter alternativement du matériau sous forme liquide ou en vrac ayant des caractéristiques optimisées pour sa résistance.

### Exposé de l'invention

Avec cet objectif en vue, l'invention a pour objet un compartiment de transport de matériau comportant une benne comportant une paroi de fond et deux parois latérales s'étendant selon une direction longitudinale et délimitant un espace de stockage, une citerne pour contenir du liquide s'étendant dans l'espace de stockage en partie inférieure et un espace de stockage de vrac pour contenir un matériau en vrac en partie supérieure au-dessus de la citerne et entre les parois latérales, l'espace de stockage de vrac étant ouverte vers le haut, caractérisé en ce que la citerne est insérable dans l'espace de stockage par le haut pour reposer sur la paroi de fond de la benne et de manière ajustée entre les parois latérales, le compartiment comportant un système de retenue pour empêcher le glissement de la citerne dans l'espace de stockage.

En réalisant une citerne structurellement indépendante de la benne, on permet un découplage mécanique entre elles, ce qui limite les tensions qui sont transmises à la citerne. Celle-ci est alors dimensionnée pour maintenir son étanchéité lorsqu'elle contient du liquide. De plus, la possibilité d'extraire la citerne par le haut préserve une modularité de la benne, en rendant possible son utilisation sans citerne.

Selon une disposition constructive, le système de retenue comporte des traverses fixées à la citerne transversalement et faisant saillie d'une paroi de citerne, les traverses venant en appui sur la paroi de fond, le système de retenue comportant en outre des taquets fixés sur la paroi de fond en faisant saillie de celle-ci et s'engageant avec les traverses pour limiter le déplacement longitudinal de la citerne sur la paroi de fond. La citerne est déjà guidée par les parois latérales. Les taquets en coopération avec les traverses permettent d'empêcher le glissement longitudinal de la citerne dans la benne. Les traverses permettent en outre de renforcer la citerne.

Selon une disposition constructive, le système de retenue comporte en outre des raidisseurs fixés sur des faces latérales de la citerne en regard des parois latérales, et des montants fixés sur les parois latérales pour limiter le déplacement longitudinal de la citerne. Cette disposition vient en complément pour arrêter le glissement longitudinal de la citerne dans la benne.

Selon un perfectionnement, les moyens de retenue comportent une première bande en matériau souple interposée entre les taquets et les traverses, respectivement entre les montants et les raidisseurs. On limite ainsi les chocs et les contraintes qui naissent de l'interface entre la citerne et la benne. La bande en matériau est par exemple un élastomère renforcé par un textile.

Selon un perfectionnement, les moyens de retenue comportent une deuxième bande en matériau souple interposée entre les traverses et la paroi de fond. On limite ainsi les chocs et les contraintes qui naissent de l'interface entre la citerne et la benne.

Selon une disposition constructive, le compartiment comporte des moyens d'étanchéité souples entre la citerne et les parois latérales. On peut ainsi utiliser la partie au-dessus de la citerne comme espace de transport de matériau en vrac, sans que ce matériau s'insère entre la parois latérales et la citerne. Tout le matériau stocké peut être évacué facilement. De plus les libertés de mouvement de la citerne par rapport aux parois latérales sont conservées.

Selon une disposition constructive, les moyens d'étanchéité comportent une troisième bande en matériau souple dont un premier lé est fixé sur la paroi latérale et un deuxième lé est fixé sur la citerne.

Selon une disposition constructive, la citerne comporte une paroi intermédiaire en regard de l'espace de stockage de vrac, la paroi intermédiaire ayant une section courbe dans un plan perpendiculaire à la direction longitudinale. Cette forme est particulièrement résistante aux efforts de pression pour contenir le liquide et pour recevoir le matériau en vrac. De plus, dans le cas d'une benne basculante, cette forme concentre le flux de matériau et le guide vers le point bas.

Selon un perfectionnement, la citerne comporte des cloisons internes pour limiter le ballant, les cloisons étant des tôles perforées. Cette technique a montré d'excellents résultats vis-à-vis des transfert de masses de liquide dans la citerne pendant le transport.

Selon un perfectionnement, la citerne comporte un orifice de vidange côté arrière du compartiment et une rampe interne pour guider le liquide vers l'orifice. L'orifice de vidange est muni classiquement d'une vanne. Le liquide peut être sorti de la citerne par écoulement naturel, ou à l'aide d'une pompe. Dans les deux cas, en prévoyant une rampe, il est possible de vider l'intégralité de la citerne en faisant basculer le compartiment, même si l'orifice n'est pas au point le plus bas de la citerne, pour des questions d'encombrement.

L'invention a aussi pour objet un véhicule de transport, caractérisé en ce qu'il comporte un compartiment telle que défini précédemment.

Selon un perfectionnement, le véhicule comporte un châssis sur lequel le compartiment est monté basculant.

### Brève description des dessins

L'invention sera mieux comprise et d'autres particularités et avantages apparaîtront à la lecture de la description qui va suivre, la description faisant référence aux dessins annexés parmi lesquels :
Fig. 1 : la figure 1 est une vue en perspective d'un véhicule conforme à un mode de réalisation de l'invention avec un compartiment comportant une benne et une citerne ;
Fig. 2 : la figure 2 est une vue en perspective de la benne de la figure 1 ;

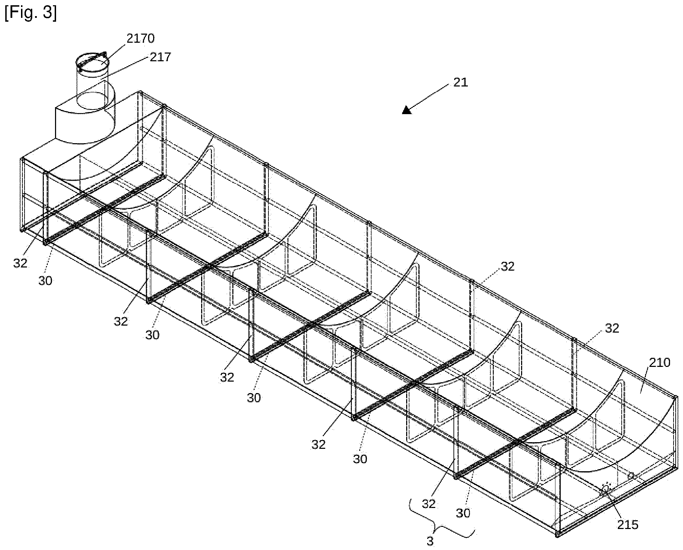

Fig. 3 : la figure 3 est une vue en perspective de la citerne de la figure 1 ;
Fig. 4 : la figure 4 est une vue d'un détail à l'arrière du compartiment de la figure 1 ;

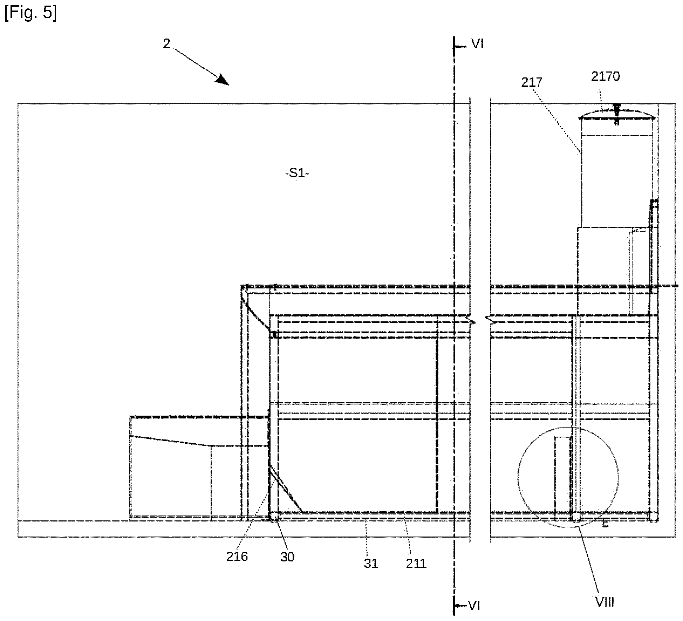

Fig. 5 : la figure 5 est une vue de côté du compartiment de la figure 1 ;
Fig. 6 : la figure 6 est une vue en coupe de la citerne et de la benne selon la ligne VI-VI de la figure 5 ;

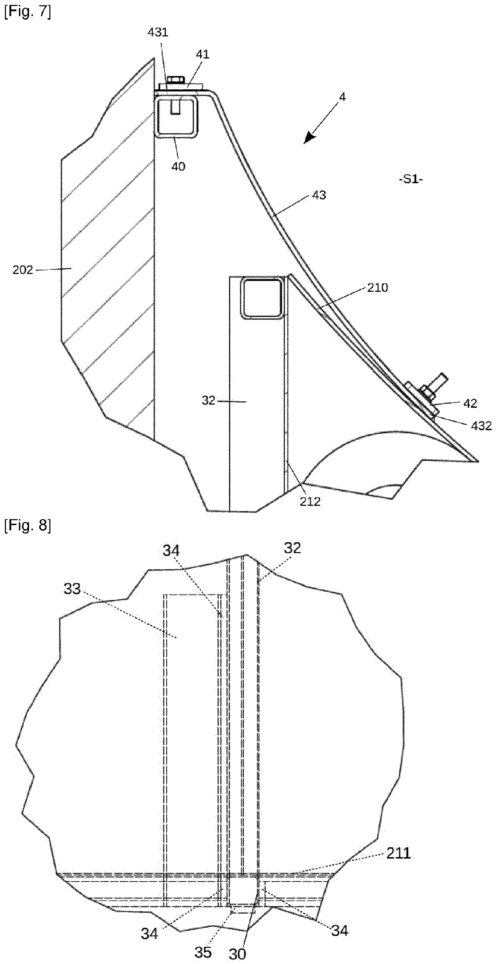

Fig. 7 : la figure 7 est une vue du détail VII de la figure 6,
Fig. 8 : la figure 8 est une vue du détail VIII de la figure 5.

### Description des modes de réalisation

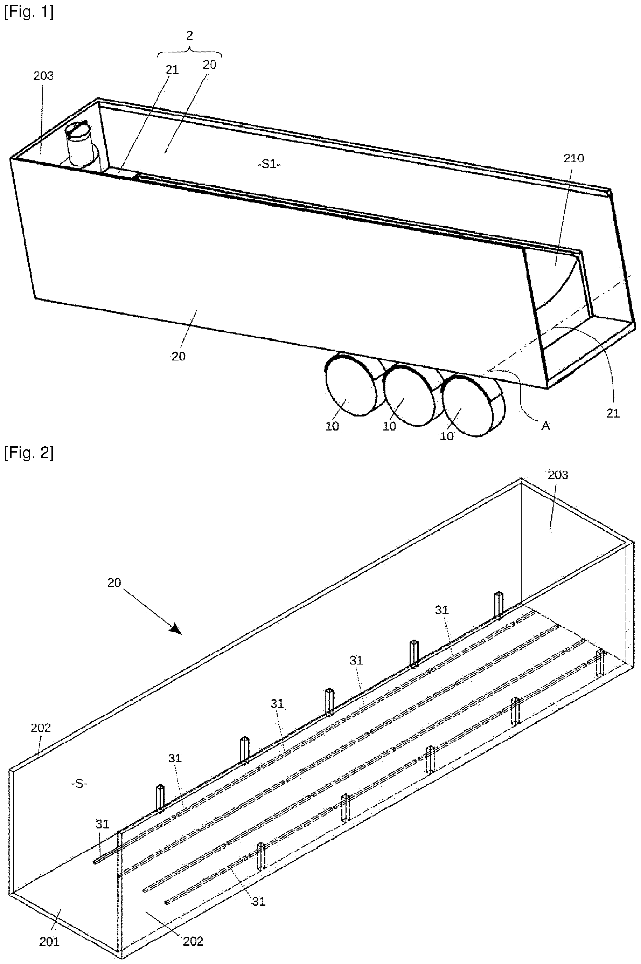

Un véhicule de transport conforme à un premier mode de réalisation est représenté sur la figure 1. Le véhicule est une remorque qui comporte un châssis 1, des roues 10 et un compartiment 2 de transport de matériau monté basculant sur le châssis 1 autour d'un axe A transversal vers l'arrière du véhicule, de manière classique. Le compartiment 2 comporte une benne 20 s'étendant selon une direction longitudinale. La section de la benne 20 est en U de manière à délimiter un espace de stockage S. La benne 20 comporte une paroi de fond 201, deux parois latérales 202 s'étendant selon la direction longitudinale et une paroi de bout 203 à l'extrémité avant. Une citerne 21 pour contenir du liquide s'étend dans l'espace de stockage S en partie inférieure et repose sur la paroi de fond 201 de la benne 20 entre les parois latérales 202. Au-dessus de la citerne 21 et entre les parois latérales 202 subsiste un espace de stockage de vrac S1 pour contenir un matériau en vrac en partie supérieure. L'espace de stockage de vrac S1 est ouvert vers le haut.

La citerne 21 comporte une paroi intermédiaire 210 en regard de l'espace de stockage de vrac S1, la paroi intermédiaire 210 ayant une section courbe dans un plan perpendiculaire à la direction longitudinale.

La citerne 21 est insérable dans l'espace de stockage S par le haut. Le compartiment 2 comporte en outre un système de retenue 3 pour empêcher le glissement de la citerne 21 dans l'espace de stockage S. Le système de retenue 3 comporte des traverses 30 fixées à la citerne 21 transversalement et faisant saillie d'une paroi de citerne 211, les traverses 30 venant en appui sur la paroi de fond 201. Le système de retenue 3 comporte en outre des taquets 31 fixés sur la paroi de fond 201 en faisant saillie de celle-ci et s'engageant avec les traverses 30 pour limiter le déplacement longitudinal de la citerne 21 sur la paroi de fond 201.

Le système de retenue 3 comporte en outre des raidisseurs 32 fixés sur des faces latérales 212 de la citerne 21 en regard des parois latérales 202, et des montants 33 fixés sur les parois latérales 202 pour limiter le déplacement longitudinal de la citerne 21. Chaque montant 33 est placé à l'arrière du raidisseur 32 avec lequel il coopère afin de retenir la citerne 21 lorsque le compartiment 2 bascule. Une première bande 34 en matériau souple est interposée entre les taquets 31 et les traverses 30, respectivement entre les montants 33 et les raidisseurs 32. Une deuxième bande 35 en matériau souple est interposée entre les traverses 30 et la paroi de fond 201.

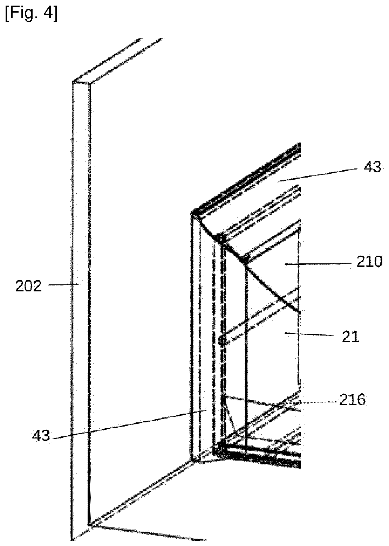

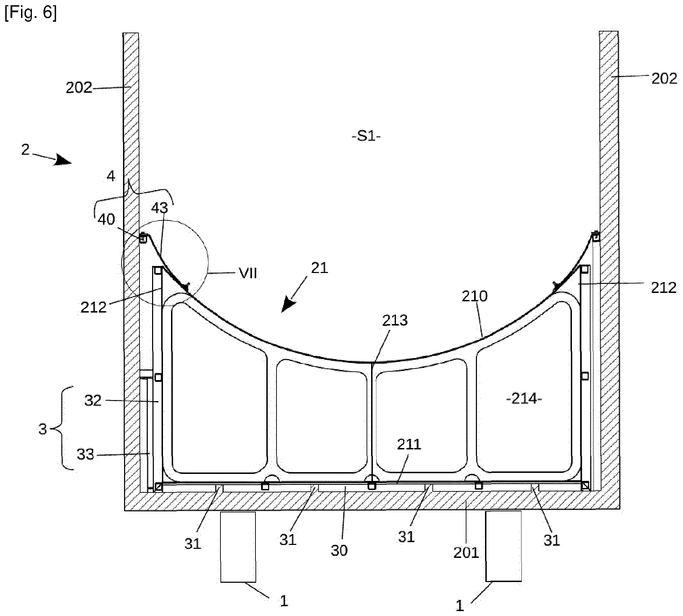

Le compartiment 2 comporte en outre des moyens d'étanchéité 4 souples entre la citerne 21 et les parois latérales 202, comme montré sur la figure 6. Ces moyens d'étanchéité 4 comportent une troisième bande 43 de matériau souple, une nervure 40 de section carrée s'étendant sur les parois latérales 202 et des plats 41, 42 vissés respectivement sur la paroi intermédiaire 210 le long des parois latérales 202 de la benne 20, et la nervure 40 pour enserrer et fixer un premier lé 431 de la troisième bande 43 en matériau souple sur la nervure 40 de la paroi latérale 202 et un deuxième lé 432 sur la paroi intermédiaire 210 de la citerne 21. La nervure 40 et la troisième bande 43 de matériau souple s'étendent également verticalement à l'arrière de la citerne 21 comme le montre la figure 4 et transversalement le long de la paroi de bout 203.

La citerne 21 comporte en outre des cloisons internes pour limiter le ballant. Une première cloison 213 interne s'étend verticalement et longitudinalement au milieu de la citerne 21 entre la paroi intermédiaire 210 et la paroi de citerne 211. Des cloisons internes transversales 214 sont réparties sur la longueur de la citerne 21. Les cloisons 213, 214 sont des tôles perforées pour laisser passer du liquide. Quelques ouvertures sont prévues pour permettre l'écoulement complet du liquide contenu dans la citerne 21 lors de la vidange.

La citerne 21 comporte en outre un orifice de vidange 215 côté arrière du compartiment et une rampe 216 interne pour guider le liquide vers l'orifice 215. La citerne 21 comporte également une colonne 217 le long de la paroi de bout 203 faisant saillie vers le haut et obturée par un couvercle amovible 2170. La citerne 21 peut ainsi être remplie par cette colonne 217.

La benne 20 est réalisée en métal, par exemple en aluminium ou en acier, et les éléments sont assemblés entre eux par soudure. Il en est de même pour la citerne 21.

Le véhicule peut comporter des équipements utiles à son exploitation. L'espace de stockage S peut être fermée par des portes à l'arrière, lesquelles peuvent être ouvertes pour le déchargement du compartiment par le basculement de celui-ci autour de l'axe A. Une pompe peut être fixée au châssis 1 ou sur la benne 20 et reliée par des conduits, non représentés, à l'intérieur de la citerne 21 afin de vider celle-ci. La colonne comporte un reniflard, non représenté, pour permettre la vidange de la citerne.

En utilisation, la citerne reçoit un liquide qui est déversé en passant par la colonne. Le couvercle est refermé pour éviter toute perte de liquide. Pour vider la citerne, le liquide est évacué par l'orifice 215 en même temps que le compartiment est basculé. Du matériau en vrac est déversé dans l'espace de stockage en vrac par dessus la citerne. Le matériau en vrac est retenu par la troisième bande 43 de matériau souple.

## Revendications

1. Compartiment de transport de matériau comportant une benne (20) comportant une paroi de fond (201) et deux parois latérales (202) s'étendant selon une direction longitudinale et délimitant un espace de stockage (S), une citerne (21) pour contenir du liquide s'étendant dans l'espace de stockage en partie inférieure et un espace de stockage de vrac (S1) pour contenir un matériau en vrac en partie supérieure, au-dessus de la citerne (21) et entre les parois latérales (202), l'espace de stockage de vrac (S1) étant ouverte vers le haut, la citerne (21) étant insérable dans l'espace de stockage (S) par le haut pour reposer sur la paroi de fond (201) de la benne (20) et de manière ajustée entre les parois latérales (202), le compartiment (2) comportant un système de retenue (3) pour empêcher le glissement de la citerne (21) dans l'espace de stockage (S), **caractérisé en ce que** le système de retenue (3) comporte des traverses (30) fixées à la citerne (21) transversalement et faisant saillie d'une paroi de citerne (21), les traverses (30) venant en appui sur la paroi de fond (201), le système de retenue (3) comportant en outre des taquets (31) fixés sur la paroi de fond (201) en faisant saillie de celle-ci et s'engageant avec les traverses (30) pour limiter le déplacement longitudinal de la citerne (21) sur la paroi de fond (201).

2. Compartiment selon la revendication 1, dans lequel le système de retenue (3) comporte en outre des raidisseurs (32) fixés sur des faces latérales de la citerne (21) en regard des parois latérales (202), et des montants (33) fixés sur les parois latérales (202) pour limiter le déplacement longitudinal de la citerne (21).

3. Compartiment selon l'une des revendications 1 ou 2, dans lequel les moyens de retenue comportent une première bande (34) en matériau souple interposée entre les taquets (31) et les traverses (30), respectivement entre les montants (33) et les raidisseurs (32).

4. Compartiment selon l'une des revendications 1 à 3, dans lequel les moyens de retenue comportent une deuxième bande (35) en matériau souple interposée entre les traverses (30) et la paroi de fond (201).

5. Compartiment selon l'une des revendications précédentes, **caractérisée en ce qu'**il comporte des moyens d'étanchéité (4) souples entre la citerne (21) et les parois latérales (202).

6. Compartiment selon la revendication 5, dans lequel les moyens d'étanchéité (4) comportent une troisième bande (43) en matériau souple dont un premier lé est fixé sur la paroi latérale (202) et un deuxième lé est fixé sur la citerne (21).

7. Compartiment selon l'une des revendications précédentes, dans lequel la citerne (21) comporte une paroi intermédiaire (210) en regard de l'espace de stockage de vrac (S 1), la paroi intermédiaire (210) ayant une section courbe dans un plan perpendiculaire à la direction longitudinale.

8. Compartiment selon l'une des revendications précédentes, dans lequel la citerne (21) comporte des cloisons internes (213, 214) pour limiter le ballant, les cloisons étant des tôles perforées.

9. Compartiment selon l'une des revendications précédentes, dans lequel la citerne (21) comporte un orifice de vidange (215) côté arrière du compartiment (2) et une rampe interne (216) pour guider le liquide vers l'orifice (215).

10. Véhicule de transport **caractérisé en ce qu'**il comporte un compartiment (2) selon l'une des revendications précédentes.

11. Véhicule selon la revendication 10, **caractérisé en ce qu'**il comporte un châssis (1) sur lequel le compartiment (2) est monté basculant.

## Patentansprüche

1. Materialtransportbehälter, der aufweist: eine Mulde (20) mit einem Boden (201) und zwei Seitenwänden (202), die sich in Längsrichtung erstrecken und einen Laderaum (S) begrenzen, einen Tank (21) zur Aufnahme von Flüssigkeiten, der sich im unteren Teil im Laderaum erstreckt, und einen Schüttgutladebereich (S1) zur Aufnahme von Schüttgut im oberen Teil über dem Tank (21) und zwischen den Seitenwänden (202), wobei der Schüttgutladebereich (S1) nach oben offen ist, der Tank (21) von oben in den Laderaum (S) eingesetzt werden kann, so dass er auf dem Boden (201) der Mulde (20) aufliegt und passgenau zwischen den Seitenwänden (202) sitzt, und wobei der Behälter (2) ein Rückhaltesystem (3) umfasst, um zu verhindern, dass sich der Tank (21) im Laderaum (S) verlagert, **dadurch gekennzeichnet, dass** das Rückhaltesystem (3) Querstreben (30) aufweist, die in Querrichtung am Tank (21) befestigt sind und über eine Wand des Tanks (21) hinausragen, wobei die Querstreben (30) auf dem Boden (201) zur Auflage kommen, und das Rückhaltesystem (3) außerdem Stopper (31) aufweist, die herausragend am Boden (201) befestigt sind und mit den Querstreben ineinandergreifen (30), um die Längsverlagerung des Tanks (21) auf dem Boden (201) zu begrenzen.

2. Behälter nach Anspruch 1, wobei das Rückhaltesystem (3) außerdem aufweist: Versteifungen (32), die an den Seitenwänden (202) zugewandten Seitenflächen des Tanks (21) befestigt sind, und Streben (33), die an den Seitwänden (202) befestigt sind, um die Längsverlagerung des Tanks (21) zu begrenzen.

3. Behälter nach Anspruch 1 oder 2, wobei die Rückhaltemittel ein erstes Band (34) aus flexiblem Material zwischen den Stoppern (31) und den Querstreben (30) beziehungsweise zwischen den Streben (33) und den Versteifungen (32) aufweisen.

4. Behälter nach Anspruch 1 bis 3, wobei die Rückhaltemittel ein zweites Band (35) aus flexiblem Material zwischen den Querstreben (30) und dem Boden (201) aufweisen.

5. Behälter nach einem der vorhergehenden Ansprüche, **dadurch gekennzeichnet, dass** er flexible Dichtmittel (4) zwischen dem Tank (21) und den Seitenwänden (202) umfasst.

6. Behälter nach Anspruch 5, bei dem die Dichtmittel (4) ein drittes Band (43) aus flexiblem Material aufweisen, von dem eine erste Bahn an der Seitenwand (202) und eine zweite Bahn am Tank (21) befestigt ist.

7. Behälter nach einem der vorhergehenden Ansprüche, wobei der Tank (21) eine dem Schüttgutladebereich (S1) zugewandte Zwischenwand (210) umfasst, und die Zwischenwand (210) einen in senkrechter Ebene zur Längsrichtung gebogenen Querschnitt aufweist.

8. Behälter nach einem der vorhergehenden Ansprüche, bei dem der Tank (21) Innenwände (213, 214) aufweist, um das Schaukeln zu begrenzen, wobei die Wände Lochbleche sind.

9. Behälter nach einem der vorhergehenden Ansprüche, wobei der Tank (21) umfasst: eine Ablassöffnung (215) an der Rückseite des Behälters (2) und eine interne Rampe (216), um die Flüssigkeit zur Öffnung (215) zu leiten.

10. Transportfahrzeug, einen Behälter (2) nach einem der vorhergehenden Ansprüche umfassend.

11. Fahrzeug nach Anspruch 10, ein Chassis (1) umfassend, auf dem der Behälter (2) kippbar montiert ist.

## Claims

1. Material transport compartment comprising a body (20) comprising a bottom wall (201) and two side walls (202) extending in the longitudinal direction and delimiting a storage space (S), a tank (21) to contain the liquid extending in the storage space in the lower part and a bulk storage space (S1) to contain a bulk material in the upper part, above the tank (21) and between the side walls (202), the bulk storage space (S1) being open at the top, the tank (21) being insertable in the storage space (S) from the top to rest on the bottom wall (201) of the body (20) fitting tightly between the side walls (202), the compartment (2) comprising a retention system (3) to prevent the tank (21) from sliding in the storage space (S), **characterised by** the fact the retention system (3) comprises crosspieces (30) fixed to the tank (21) transversely and protruding from one wall of the tank (21), the crosspieces (30) resting on the bottom wall (201), the retention system (3) also comprising flanges (31) fixed to the bottom wall (201) protruding from it and interlocking with the crosspieces (30) to limit the longitudinal movement of the tank (21) along the bottom wall (201).

2. Compartment as per claim 1, in which the retention system (3) also comprises stiffeners (32) fixed to the side faces of the tank (21) facing the side walls (202), and uprights (33) fixed to the side walls (202) to limit the longitudinal movement of the tank (21).

3. Compartment as per one of the claims 1 or 2, in which the retention means comprises a first strip (34) made of a flexible material positioned between the flanges (31) and crosspieces (30), respectively between the uprights (33) and stiffeners (32).

4. Compartment as per one of the claims 1 to 3, in which the means of retention comprises a second strip (35) made of a flexible material positioned between the crosspieces (30) and the bottom wall (201).

5. Compartment as per one of the above claims, **characterised by** the fact that it comprises flexible means of sealing (4) between the tank (21) and the side walls (202).

6. Compartment as per claim 5, in which the means of sealing (4) comprises a third strip (43) made of a flexible material a first width of which is fixed to the side wall (202) and a second width is fixed to the tank (21).

7. Compartment as per one of the above claims in which the tank (21) comprises an intermediate wall (210) facing the bulk storage space (S1), the intermediate wall (210) having a curved section in a plane perpendicular to the longitudinal direction.

8. Compartment as per one of the above claims in which the tank (21) comprises internal partitions (213, 214) to limit the liquid swell, the partitions being made of perforated metal sheets.

9. Compartment as per one of the above claims in which the tank (21) comprises a drain port (215) on the rear end of the compartment (2) and an internal ramp (216) to guide the liquid to the port (215).

10. Transport vehicle **characterised by** the fact that it comprises a compartment (2) as per one of the above claims.

11. Vehicle as per claim 10, **characterised by** the fact that it comprises a chassis (1) on which the compartment (2) is mounted in such a way it can be tipped.
